# EUROPÄISCHE PATENTANMELDUNG

(11) **EP 2 296 253 A2**
(43) Veröffentlichungstag der Anmeldung: **16.03.2011**
(21) Anmeldenummer: 10170232.2
(22) Anmeldetag: 21.07.2010
(51) Int. Cl.: H02K 1/27, H02K 29/03

(54) **Permanentmagneterregte elektrische Maschine mit reduziertem Lastmoment**

(30) Priorität: 15.09.2009 DE 102009029472
(71) Anmelder: Robert Bosch GmbH, 70442 Stuttgart (DE)
(72) Erfinder: Babajanyan, Artem, 76532, Baden-Baden (DE)

(57) **Zusammenfassung**

Die Erfindung betrifft eine elektrische Maschine (1), insbesondere permanentmagneterregte Synchronmaschine, umfassend:
- einen Stator (2) mit Statorzähnen;
- einen Läufer (3) mit eingeschlossenen Permanentmagneten (6), wobei jeder der Permanentmagneten (6) mindestens einem Polschuh (12) zugeordnet ist, der zwischen dem Permanentmagneten (6) und einer Außenfläche des Läufers (3) angeordnet ist, so dass über die Außenfläche ein magnetisches Feld auf die Statorzähne (8) gerichtet wird, und der bei Bewegung des Läufers (3) in einer Bewegungsrichtung an den Statorzähnen vorbeiläuft;

wobei mindestens einer der Polschuhe (12) strukturiert ist, um in einem oder mehreren Teilabschnitten des Polschuhs (12) entlang einer Erstreckung des Polschuhs in der Bewegungsrichtung eine Schwächung eines von den Permanentmagneten (6) bewirkten und auf den Stator (2) gerichteten magnetischen Flusses hervorzurufen.

## Beschreibung

### Technisches Gebiet

Die Erfindung betrifft elektrische Maschinen, insbesondere Synchronmaschinen, mit Permanentmagneterregung, insbesondere Synchronmaschinen mit einem Läufer mit vergrabenen Magneten.

### Stand der Technik

Elektrische Maschinen mit Permanentmagneterregung sind aus dem Stand der Technik hinreichend bekannt. Insbesondere rotatorische permanentmagneterregte Synchronmaschinen mit Innenläufer werden in vielen Einsatzbereichen verwendet.

Übliche permanentmagneterregte Synchronmaschinen weisen in der Regel einen Läufer, beispielsweise in Form eines innenliegenden Rotors, auf, der mit Permanentmagneten versehen ist. Die Permanentmagneten bewirken einen magnetischen Fluss vorzugsweise durch so genannte Rotorpole in Richtung eines den Rotor umgebenden Stators. Der Stator der Synchronmaschine ist in der Regel mit Statorzähnen ausgebildet, die äquidistant ins Innere des Stators reichen. Die Statorzähne können jeweils ganz oder teilweise von einer Statorspule umgeben sein. Eine solche elektrische Maschine bildet Rastmomente dadurch aus, dass die Rotorpole bestrebt sind, eine Position eines energetischen Minimums einzunehmen. Für jeden Rotorpol entspricht eine solche Position einer Position, bei der der entsprechende Rotorpol unmittelbar einem Statorzahn gegenüberliegt. In der Praxis führen solche Rastmomente zu einer Drehmomentenwelligkeit im Betrieb des Synchronmotors. Auch im unbestromten Zustand treten diese Rastmomente auf und können in einigen Anwendungen störend sein, beispielsweise bei Lenkhilfeantrieben in Kraftfahrzeugen, und es ist daher wünschenswert, diese zu reduzieren oder zu vermeiden.

Bei Synchronmotoren mit vergrabenen Permanentmagneten im Rotor tritt in der Regel im Gegensatz zu schalensegmentförmig auf der Oberfläche des Rotors fixierten, sogenannten aufgesetzten Permanentmagneten ein höheres Rastmoment und damit eine höhere Drehmomentwelligkeit auf.

Zur Reduzierung von Drehmomentwelligkeiten ist es bislang bekannt, die Polschuhform anzupassen, so dass zwischen den Rotorpolen Nuten gebildet werden. Die Polschuhe weisen in solchen Fällen Konturen auf wie beispielsweise eine Richter-Kontur, mit der bestimmte (ortsabhängige) Profile des magnetischen Flusses durch den Polschuh erreicht werden können, beispielsweise sinusförmige Verläufe über die Breite des Polschuhs. Rotoren mit derartigen Polschuhformen sind jedoch aufwändig herzustellen, da die Kontur ihres Polschuhs einer bestimmten Funktion folgen muss.

Aus der Druckschrift DE10256523 A1 ist eine elektrische Maschine bekannt, bei der ein Polschuh eines Rotors strukturiert ist, dass dieser ein magnetisch anisotrope Eigenschaft aufweist.

Es ist daher Aufgabe der vorliegenden Erfindung, eine elektrische Maschine mit Permanentmagneterregung zur Verfügung zu stellen, bei der die Stärke von Rastmomenten und damit die Drehmomentwelligkeit reduziert ist.

### Offenbarung der Erfindung

Diese Aufgabe wird durch die elektrische Maschine nach Anspruch 1 gelöst.

Weitere vorteilhafte Ausgestaltungen sind in den abhängigen Ansprüchen angegeben.

Gemäß einem ersten Aspekt ist eine elektrische Maschine, insbesondere permanentmagneterregte Synchronmaschine, vorgesehen. Die elektrische Maschine umfasst:
- einen Stator mit Statorzähnen;
- einen Läufer mit eingeschlossenen Permanentmagneten, wobei jeder der Permanentmagneten mindestens einem Polschuh zugeordnet ist, der zwischen dem Permanentmagneten und einer Außenfläche des Läufers angeordnet ist, so dass über die Außenfläche ein magnetisches Feld auf die Statorzähne gerichtet wird, und der bei Bewegung des Läufers in einer Bewegungsrichtung an den Statorzähnen vorbeiläuft;
wobei mindestens einer der Polschuhe strukturiert ist, um in einem oder mehreren Teilabschnitten des Polschuhs entlang einer Erstreckung des Polschuhs in der Bewegungsrichtung eine Schwächung eines von den Permanentmagneten bewirkten und auf den Stator gerichteten magnetischen Flusses hervorzurufen.

Eine Idee der obigen elektrischen Maschine besteht darin, durch Strukturierung der Polschuhe des Läufers die Rastmomente zu reduzieren und dadurch auch die Drehmomentwelligkeit zu verringern.

Weiterhin kann der Teilabschnitt dort vorgesehen sein, wo ohne Strukturierung des Polschuhs ein Bereich des größten magnetischen Flusses innerhalb der gesamten Erstreckung des Polschuhs in Bewegungsrichtung auftreten würde.

Dadurch können insbesondere bei Sinus- oder Blockbestromung die Drehmomentwelligkeit im Vergleich zu herkömmlichen Gestaltungen von Polschuhen die Rastmomente um mehr als das Dreifache reduziert werden.

Es kann vorgesehen sein, dass zwischen dem mindestens einem Polschuh und Zahnköpfen der Statorzähne ein Luftspalt mit einer über die Erstreckung des Polschuhs in der Bewegungsrichtung variierender Breite gebildet ist.

Gemäß einer Ausführungsform kann in dem Teilabschnitt innerhalb der Erstreckung des mindestens einen Polschuhs in der Bewegungsrichtung eine erste Ausnehmung vorgesehen sein, die sich von der Außenfläche ins Innere des Polschuhs erstreckt. Die Ausnehmung bewirkt, dass für den betreffenden Polschuh kein energetisches Minimum (der potentiellen Energie) an der Position vorliegt, wenn der betreffende Polschuh dem Statorzahn direkt (d.h. ohne Versatz) gegenüberliegt.

Weiterhin kann die Ausnehmung eine bezüglich einer Fläche senkrecht zur Bewegungsrichtung halbkreisförmige, halbellipsoide oder gekrümmte Kontur und/eine Kontur mit linearen Verläufen aufweisen.

Weiterhin kann die erste Ausnehmung mittig in der Erstreckung des Polschuhs in der Bewegungsrichtung angeordnet sein.

Eine oder mehrere zweite Ausnehmungen können im Inneren des Polschuhs und/oder zwischen dem Polschuh und dem zugeordneten Permanentmagneten in einem oder mehreren zweiten Teilabschnitten vorgesehen sein.

Die eine oder die mehreren zweiten Ausnehmungen können in der Erstreckung des Polschuhs in der Bewegungsrichtung mittig zwischen der ersten Ausnehmung und einem Ende des Polschuhs in der Bewegungsrichtung angeordnet sein.

Gemäß einer Ausführungsform können die erste Ausnehmung und/oder die eine oder die mehreren zweiten Ausnehmungen eine Breite in der Bewegungsrichtung aufweisen, die gleich oder größer ist als die Breite einer Statornut, die einem Abstand zwischen dem Läufer zugewandten Enden der Statorzähne entspricht.

Es kann vorgesehen sein, dass der Läufer mit einem Stapel aus gegeneinander isolierten Läuferlamellen, insbesondere Blechlamellen, ausgebildet ist, wobei eine Lamellendicke der Lamellen geringer ist als die Breite der ersten Ausnehmung und/oder die Breite der einen oder der mehreren zweiten Ausnehmungen.

Gemäß einer weiteren Ausführungsform kann die elektrische Maschine als rotatorische elektrische Maschine oder als translatorische Maschine ausgebildet sein.

Gemäß einem weitern Aspekt ist eine Läuferanordnung für eine elektrische Maschine vorgesehen. Die Läuferanordnung umfasst:
- ein Läufer mit eingeschlossenen Permanentmagneten, wobei jeder der Permanentmagneten mindestens einem Polschuh zugeordnet ist, der zwischen dem Permanentmagneten und einer Außenfläche des Läufers angeordnet ist, so dass über die Außenfläche ein magnetisches Erregerfeld abgegeben wird, und
- eine Lagerung, um eine Bewegung des Läufers in einer Bewegungsrichtung zu ermöglichen;
wobei mindestens einer der Polschuhe strukturiert ist, um in einem oder mehreren Teilabschnitten des Polschuhs entlang einer Erstreckung des Polschuhs in der Bewegungsrichtung eine Schwächung eines von den Permanentmagneten bewirkten, über die Außenfläche abgegebenen magnetischen Flusses hervorzurufen.

### Kurzbeschreibung der Zeichnungen

Bevorzugte Ausführungsformen werden nachfolgend anhand der beigefügten Zeichnungen näher erläutert. Es zeigen:
- Figur 1: eine Querschnittsdarstellung einer Synchronmaschine;
- Figur 2: eine Darstellung eines Ausschnitts aus der Synchronma- schine der Figur 1;
- Figuren 3a und 3b: Verläufe der induzierten Spannung und des Rastmoments über dem elektrischen Rotorlagewinkel einer herkömmlichen Synchronmaschine und einer Synchronmaschine mit verän- derten Rotorpolschuhen bei ansonsten gleicher Geometrie und Auslegung; und
- Figuren 4a und 4b: Verläufe der Drehmomente über dem elektrischen Rotorla- gewinkel bei Sinus- und bei Blockbestromung für eine her- kömmliche Synchronmaschine und eine Synchronmaschine mit veränderter Geometrie der Rotorpolschuhe.

### Beschreibung von Ausführungsformen

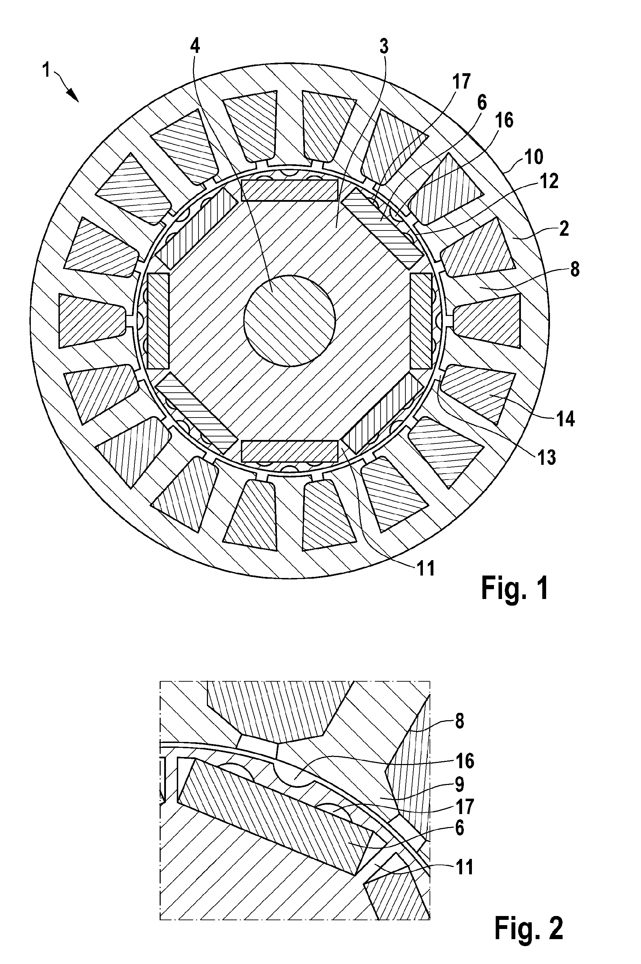

In Figur 1 ist als Beispiel für eine elektrische Maschine eine permanentmagneterregte rotatorische Synchronmaschine 1 im Querschnitt schematisch dargestellt. Die Synchronmaschine 1 ist als Innenläufermotor ausgeführt und weist einen Stator 2 auf, der einen Rotor 3 umgibt. Der Stator 2 und der Rotor 3 sind konzentrisch zueinander angeordnet.

Der Rotor 3 ist drehbeweglich an einer Welle 4 gelagert und weist im vorliegenden Ausführungsbeispiel 8 Rotorpole 5 auf, die jeweils mit einem Permanentmagneten 6 gekoppelt sind. Ein Rotorkörper 11 des Rotors 3 ist aus einer Vielzahl von einstückigen aneinander liegenden profilierten Blechlamellen (nicht gezeigt) zusammengesetzt und weist Taschen 7 auf, in denen die Permanentmagneten 6 aufgenommen werden. Im gezeigten Ausführungsbeispiel erstrecken sich die Taschen 7 im wesentlichen axial und tangential in dem Rotorkörper 11. Die Dicke der Tasche 7 (in radialer Richtung) ist vorzugsweise geringer als die axialen und tangentialen Dimension. Der der Tasche 7 zugeordnete, in der Regel quaderförmige Permanentmagnet 6 wird so aufgenommen, dass seine Magnetisierungsrichtung parallel zu einer radialen Richtung des Rotors 3 verläuft. Jeweils in Umfangsrichtung zueinander benachbarte Permanentmagneten 6 weisen eine in radialer Richtung entgegengesetzte Polarität auf. Die Außenkontur des Rotors 3 ist im vorliegenden Ausführungsbeispiel kreisförmig, d.h. es sind keine Polnuten vorgesehen.

Die hier gezeigte Synchronmaschine 1 umfasst einen Rotor 3 mit vergrabenen Permanentmagneten 6. Ein Rotorpol wird durch den Permanentmagneten 6 und einen Abschnitt des Rotorkörpers 11 gebildet, der zwischen dem Stator 2 und dem Permanentmagneten 6 liegt. Dieser Abschnitt wird Rotorpolschuh 12 genannt. Im gezeigten Ausführungsbeispiel weist jeder Rotorpol einen Permanentmagneten 6 auf, der bezüglich des Rotorpols symmetrisch angeordnet ist, um eine bezüglich einer Mittenachse des Rotorpols symmetrische Feldverteilung des durch den entsprechenden Permanentmagneten hervorgerufenen Erregerfelds zu erreichen.

In alternativen Ausführungsformen kann der Rotor 3 auch eine Folgepolanordnung aufweisen, bei der nur jedem zweiten Rotorpol ein Permanentmagnet 6 zugeordnet ist. Weiterhin können die Permanentmagneten 6 auch als Speichenmagnete angeordnet sein, die in entsprechenden Taschen seitlich der Rotorpole in radialer Richtung ausgerichtet sind und ein Magnetfeld in tangentialer Richtung bezüglich der Welle 4 abgeben. Auch eine Kombination der Folgepolanordnung und der oben beschriebenen Speichenmagnetanordnung in einer Synchronmaschine ist möglich.

Der Stator 2 weist in radialer Richtung nach innen gerichtete Statorzähne 8 auf. Die Statorzähne 8 sind mit einem Rückschlussring 10 des Stators 2 miteinander verbunden und sind in Umfangsrichtung des Rückschlussrings 10 äquidistant angeordnet. Die Statorzähne 8 sind an ihrem inneren Ende durch einen Zahnkopf 9 abgeschlossen. Der Zahnkopf 9 entspricht einem nach innen gerichteten Ende des Statorzahns 8 und kann, wie im gezeigten Ausführungsbeispiel, eine Verbreiterung an dem Ende der Statorzähne 8 aufweisen, wodurch die Statornuten 13, d.h. der Abstand zwischen den in tangentialer Richtung einander gegenüberliegenden Enden der Zahnköpfe 9, definiert werden. Im gezeigten Ausführungsbeispiel sind 18 Statorzähne 8 vorgesehen, die je nach Ausführungsform eine oder mehrere Wicklungen 14 tragen können.

Aufgrund der Ausgestaltung mit vergrabenen Permanentmagneten 6 sind die Rastmomente bei einem solchen Synchronmotor stark ausgeprägt, insbesondere gegenüber Synchronmaschinen mit aufgesetzten Permanentmagneten. Diese sind insbesondere bei Anwendungen im Automobilbereich, z. B. in Lenkhilfesystemen für Kraftfahrzeuge, unerwünscht und sollen dort reduziert werden, um die Drehmomentwelligkeit so gering wie möglich zu halten. Dazu ist vorgesehen, den Rotorpolschuh 12 mindestens eines der Polschuhe des Rotors 3 mit Ausnehmungen 15 zu versehen, um den auf den jeweiligen Statorzahn 8 gerichteten magnetischen Fluss an bestimmten tangentialen Positionen des Rotorpolschuhs 12, an denen ein lokales Maximum des Rastmoments vorliegt, zu verringern.

Wie in Figur 2 dargestellt ist, weist der Rotorpolschuh 12 des Rotorpols mittig eine Ausnehmung 16 auf, die sich beispielsweise nutartig in axialer Richtung des Rotors 3 erstreckt und die von der äußeren Oberfläche des Rotorpolschuhs 12 in radialer Richtung nach innen weist. Die Ausnehmung 16 hat im gezeigten Ausführungsbeispiel in einer zur Achsrichtung senkrechten Ebene kreisförmige Kontur. Die Kontor kann jedoch auch andere Formen aufweisen. Um die Drehmomentwelligkeit wirksam zu unterdrücken, ist es notwendig, dass die Breite der Ausnehmung 16 in Umfangsrichtung mindestens der Breite einer Statornut 13 entspricht.

Die von der Drehzahl der Synchronmaschine 1 abhängige Hauptfrequenz der Drehmomentwelligkeit wird hauptsächlich davon beeinflusst, dass die Rotorpolschuhe 12 dazu tendieren, sich jeweils auf einen nächstgelegenen Statorzahn 8 auszurichten und dadurch eine entsprechende Kraft auf den Rotor 3 hervorruft, die das Rastmoment bewirkt. Das Rastmoment bzw. die Drehmomentenwelligkeit kann also reduziert werden, wenn diese Tendenz des Rotorpols, sich auf den nächsten Statorzahn 8 auszurichten, reduziert bzw. eliminiert wird. Betrachtet man den einzelnen Rotorpol einer herkömmlichen Synchronmaschine mit nicht strukturiertem Rotorpolschuh, so wird bezüglich seiner Lageenergie ein minimales Energieniveau dann erreicht, wenn sich die radialen Mittenachse des Rotorpols auf eine radiale Mittenachse eines entsprechenden Statorzahns 8 ausrichtet. Durch Vergrößern des Luftspaltes an der Position der Mittenachse des Rotorpols kann die dort auftretende magnetische Feldstärke reduziert werden und damit die dort vorherrschende Energieniveau (einer potentiellen Energie bzw. Ladeenergie) erhöht werden, so dass die Tendenz des Rotorpols sich exakt auf den Statorzahn 8 auszurichten, reduziert bzw. aufgehoben wird. Die örtliche Positionierung der Ausnehmung 16 im Rotorpolschuh 12 ist wesentlich für die Unterdrückung der Hauptfrequenz (drehzahlabhängig) des Rastmoments.

Die Verringerung bzw. Eliminierung des durch die exakte Ausrichtung des Rotorpolschuhs 12 auf den Statorzahn 8 bewirkten Rastmoments führt dazu, dass die größten auftretenden Rastmomente Rastmomente höherer Ordnung sind. Rastmomente höherer Ordnung entstehen durch die Überlagerung der jeweils maximalen Energieniveaus der Lageenergie jeder der Rotorpole. Diese weisen nach Wegfall der Rastmomente der Hauptordnung die größte Amplitude auf. Durch weitere Ausnehmungen 16 an den Positionen der Rotorpolschuhe 12, die sich auf den Statorzahn 8 ausrichten, wenn aufgrund des Wegfalls der Rastmomente der Hauptordnung keine Tendenz zur Ausrichtung der Mittenachse des Rotorpols auf den Statorzahn 8 mehr besteht, können auch die Rastmomente höherer Ordnung reduziert werden.

Da die Ausnehmungen 16 bestimmte Breiten aufweisen müssen, die sich an den Breiten der Statornuten 13 orientieren, um effizient das Rastmoment der entsprechenden Ordnung zu reduzieren, kann die Anordnung mehrerer Ausnehmungen 16 an der Oberfläche des jeweiligen Rotorpols schwierig sein. Insbesondere kann es dadurch - je nach Dimensionierung der Synchronmaschine - zu einem Ineinanderübergehen der Ausnehmungen 16 kommen, was den Effekt des Aufhebens der lokalen Minima der Energieniveaus reduziert oder zerstört.

Alternativ und zusätzlich kann daher die Anordnung von weiteren Ausnehmungen 17 beispielsweise innerhalb des Rotorpols zwischen der nach außen gerichteten Magnetisierungsfläche des Permanentmagneten 6 und dem Rotorpolschuh 12 möglichst versetzt zur Mittenachse des Rotorpols vorgesehen sein. Die so angeordneten innen liegenden Ausnehmungen können ebenfalls eine senkrecht zur Drehachse des Rotors 3 verlaufende kreisförmige oder ellipsoide Kontur oder Kontur mit sonstigem gekrümmten Verlauf aufweisen. Auch Konturen mit linearen Abschnitten sind möglich. Allgemein kann die Kontur der weiteren Ausnehmungen 17 gleich oder von der Kontur der Ausnehmung 16 verschieden sein. Insbesondere wenn die Konturen der Ausnehmungen 16, 17 sich ins Innere des Rotorpolschuhs 12 verjüngend ausgebildet sind, können die Ausnehmungen 16, 17 gemeinsam an einem Rotorpolschuh 12 angeordnet werden, um auch Rastmomente höherer Ordnung zu unterdrücken und die Drehmomentwelligkeit weiter zu reduzieren.

Um den Effekt der Reduzierung der Rastmomente in ausreichendem Maße zu gewährleisten, ist es notwendig, dass der Rotor 3 aus Blechlamellen aufgebaut wird und die Breiten der Statornuten 13 bzw. die Breiten der Ausnehmungen 16 in den Rotorpolschuhen 12 in Umfangsrichtung nicht kleiner sind als die Dicke (in Achsrichtung des Rotors) einer Blechlamelle.

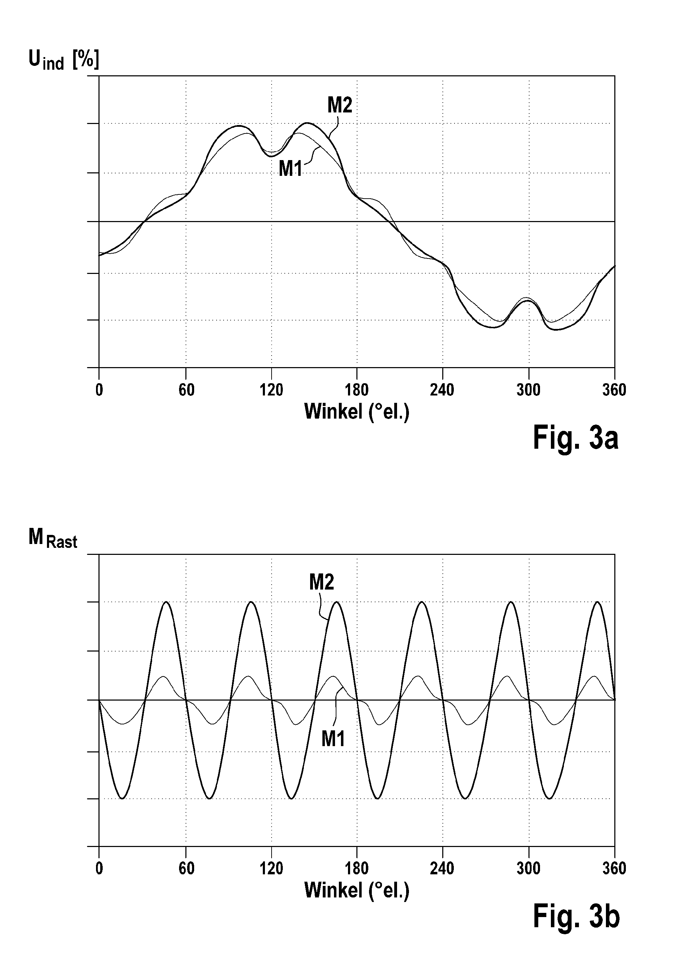

In den Figuren 3a und 3b sind die Verläufe der induzierten Spannung U_{Ind} und der Rastmomente M_{Rast} einer Synchronmaschine (M1) mit einer Strukturierung der Rotorpolschuhe 12, wie sie in Figur 2 dargestellt ist, im Vergleich zu einer herkömmlichen Synchronmaschine (M2) ohne Strukturierung der Rotorpolschuhe über dem elektrischen Rotorlagewinkel dargestellt. In Figur 3a erkennt man, dass die induzierte Spannung U_{Ind} insgesamt geglättet wird, so dass hohe Steilheiten der induzierten Spannung U_{Ind} bei einem strukturierten Rotorpolschuh 12 flacher werden. Außerdem bewirkt die Ausnehmung 16, die mittig in dem Rotorpolschuh 12 angeordnet ist, eine Beschränkung der Spannungsinduktion bei dem elektrischen Rotorlagewinkel von 120° und 300°. Aufgrund der flacheren Änderung der induzierten Spannungen U_{Ind} verringert sich das resultierende Rastmoment M_{Rast}, dessen Verlauf in Figur 3b dargestellt ist. Man erkennt, dass sich mit der Strukturierung des Rotorpolschuhs 12, wie sie in Figur 2 dargestellt ist, eine Reduzierung des maximalen Rastmoments auf 30% des Rastmoments der herkömmlichen Synchronmaschine ohne Strukturierung des Rotorpolschuhs 12 ergibt.

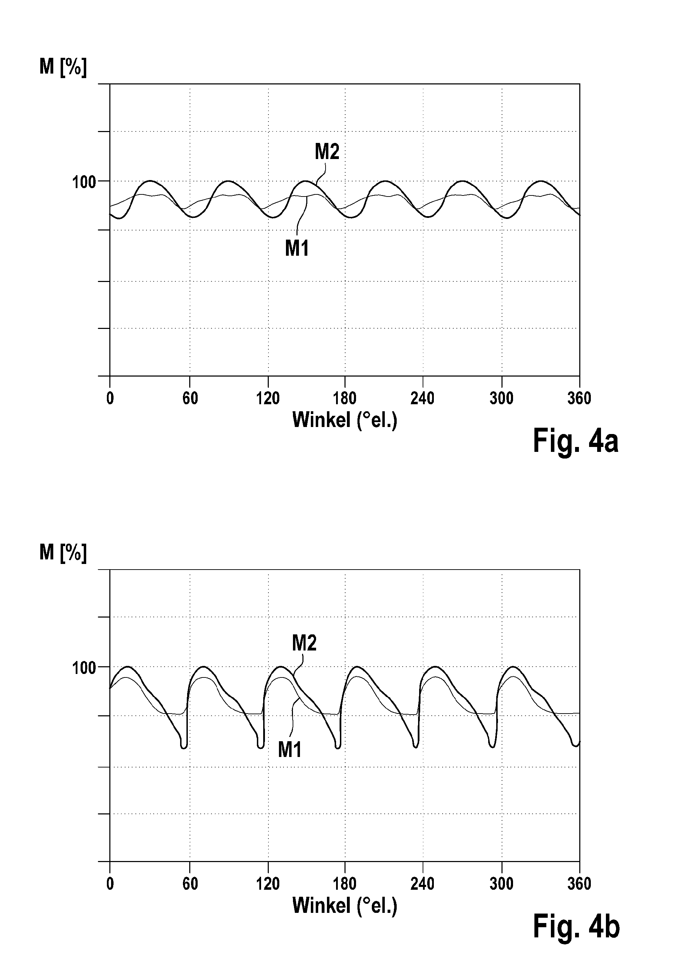

In den Figuren 4a und 4b sind die Drehmomentverläufe bei einer Sinusbestromung bzw. bei einer Blockbestromung über dem elektrischen Rotorlagewinkel prozentual bezogen auf ein maximales Drehmoment dargestellt. Man erkennt in beiden Fällen, dass die Drehmomentverläufe durch einen strukturierten Rotorpolschuh 12 deutlich gleichmäßiger verlaufen als dies bei einer herkömmlichen Synchronmaschine ohne strukturierten Rotorpolschuh der Fall ist. Bei der oben beschriebenen Topologie einer Synchronmaschine 1 lässt sich die Drehmomentwelligkeit bei einer Sinusbestromung auf 40% und bei einer Blockbestromung auf 80% der Drehmomentwelligkeit der nicht modifizierten Synchronmaschine reduzieren.

Die oben beschriebene Ausgestaltung des Rotorpolschuhs lässt sich ohne Weiteres auf Polschuhe von Linearmotoren oder Außenläufermotoren übertragen. Wesentlich ist, dass die Positionen des Polschuhs in Umfangsrichtung, die dazu tendieren, sich auf eine Mittenachse eines jeweiligen Statorzahns auszurichten, mit einer Strukturierung versehen werden, die zu einer Abschwächung des magnetischen Feldes führen.

## Patentansprüche

1. Elektrische Maschine (1), insbesondere permanentmagneterregte Synchronmaschine, umfassend:
- einen Stator (2) mit Statorzähnen (8);
- einen Läufer (3) mit eingeschlossenen Permanentmagneten (6), wobei jeder der Permanentmagneten (6) mindestens einem Polschuh (12) zugeordnet ist, der zwischen dem Permanentmagneten (6) und einer Außenfläche des Läufers (3) angeordnet ist, so dass über die Außenfläche ein magnetisches Feld auf die Statorzähne (8) gerichtet wird, und der bei Bewegung des Läufers (3) in einer Bewegungsrichtung an den Statorzähnen (8) vorbeiläuft; wobei mindestens einer der Polschuhe (12) strukturiert ist, um in einem oder mehreren Teilabschnitten des Polschuhs (12) entlang einer Erstreckung des Polschuhs (12) in der Bewegungsrichtung eine Schwächung eines von den Permanentmagneten (6) bewirkten und auf den Stator (2) gerichteten magnetischen Flusses hervorzurufen.

2. Elektrische Maschine (1) nach Anspruch 1, wobei der Teilabschnitt dort vorgesehen ist, wo ohne Strukturierung des Polschuhs (12) ein Bereich des größten magnetischen Flusses innerhalb der gesamten Erstreckung des Polschuhs (12) in Bewegungsrichtung auftreten würde.

3. Elektrische Maschine (1) nach Anspruch 1 oder 2, wobei zwischen dem mindestens einem Polschuh (12) und Zahnköpfen (9) der Statorzähne (8) ein Luftspalt mit einer über die Erstreckung des Polschuhs (12) in der Bewegungsrichtung variierender Breite gebildet ist.

4. Elektrische Maschine (1) nach Anspruch 3, wobei in dem Teilabschnitt innerhalb der Erstreckung des mindestens einen Polschuhs (12) in der Bewegungsrichtung eine erste Ausnehmung (16) vorgesehen ist, die sich von der Außenfläche ins Innere des Polschuhs (12) erstreckt.

5. Elektrische Maschine (1) nach Anspruch 4, wobei die erste Ausnehmung (16) eine bezüglich einer Fläche senkrecht zur Bewegungsrichtung halbkreisförmige, halbellipsoide oder gekrümmte Kontur und/eine Kontur mit linearen Verläufen aufweist.

6. Elektrische Maschine (1) nach Anspruch 4 oder 5, wobei die erste Ausnehmung (16) mittig in der Erstreckung des Polschuhs (12) in der Bewegungsrichtung angeordnet ist.

7. Elektrische Maschine (1) nach einem der Ansprüche 4 bis 6, wobei eine oder mehrere zweite Ausnehmungen (17) im Inneren des Polschuhs (12) und/oder zwischen dem Polschuh (12) und dem zugeordneten Permanentmagneten (6) in einem oder mehreren zweiten Teilabschnitten vorgesehen sind.

8. Elektrische Maschine (1) nach Anspruch 7, wobei die eine oder die mehreren zweiten Ausnehmungen (17) in der Erstreckung des Polschuhs (12) in der Bewegungsrichtung mittig zwischen der ersten Ausnehmung (16) und einem Ende des Polschuhs (12) in der Bewegungsrichtung angeordnet sind.

9. Elektrische Maschine (1) nach einem der Ansprüche 1 bis 8, wobei die erste Ausnehmung (16) und/oder die eine oder die mehreren zweiten Ausnehmungen (17) eine Breite in der Bewegungsrichtung aufweisen, die gleich oder größer ist als die Breite einer Statornut (13), die einem Abstand zwischen dem Läufer (3) zugewandten Enden der Statorzähne (8) entspricht.

10. Elektrische Maschine (1) nach einem der Ansprüche 1 bis 9, wobei der Läufer (3) mit einem Stapel aus gegeneinander isolierten Läuferlamellen, insbesondere Blechlamellen, ausgebildet ist, wobei eine Lamellendicke der Lamellen geringer ist als die Breite der ersten Ausnehmung (16) und/oder die Breite der einen oder der mehreren zweiten Ausnehmungen (17).

11. Elektrische Maschine (1) nach einem der Ansprüche 1 bis 10, wobei die elektrische Maschine (1) als rotatorische elektrische Maschine oder als translatorische Maschine ausgebildet ist.

12. Läuferanordnung für eine elektrische Maschine (1), umfassend:
- ein Läufer (3) mit eingeschlossenen Permanentmagneten (6), wobei jeder der Permanentmagneten (6) mindestens einem Polschuh (12) zugeordnet ist, der zwischen dem Permanentmagneten (6) und einer Außenfläche des Läufers (3) angeordnet ist, so dass über die Außenfläche ein magnetisches Erregerfeld abgegeben wird, und
- eine Lagerung, um eine Bewegung des Läufers (3) in einer Bewegungsrichtung zu ermöglichen;
wobei mindestens einer der Polschuhe (12) strukturiert ist, um in einem oder mehreren Teilabschnitten des Polschuhs (12) entlang einer Erstreckung des Polschuhs in der Bewegungsrichtung eine Schwächung eines von den Permanentmagneten (6) bewirkten, über die Außenfläche abgegebenen magnetischen Flusses hervorzurufen.
